Europäisches Patentamt

European Patent Office

Office européen des brevets

(11) Veröffentlichungsnummer: **0 454 948 A2**

## (12) EUROPÄISCHE PATENTANMELDUNG

(21) Anmeldenummer: 91101068.4

(22) Anmeldetag: 28.01.91

(51) Int. Cl.5: **F24H 8/00, C02F 1/66**

Die Bezeichnung der Erfindung wurde geändert (Richtlinien für die Prüfung im EPA, A-III, 7.3).

(30) Priorität: 30.03.90 DE 4010321

(43) Veröffentlichungstag der Anmeldung:
06.11.91 Patentblatt 91/45

(84) Benannte Vertragsstaaten:
AT BE CH DE DK ES FR GB GR IT LI LU NL SE

(71) Anmelder: **AQUAMOT AG**
**Aegeristrasse 48**
**CH-6301 Zug(CH)**

(72) Erfinder: **Boguslawski,Zbigniew,Dr.**
**Frankfurter Strasse 167**
**W-6078 Neu-Isenburg(DE)**

(74) Vertreter: **Eyer, Eckhardt Philipp, Dipl.-Ing. et al**
**Patentanwälte Eyer & Linser**
**Robert-Bosch-Strasse 12a**
**W-6072 Dreieich(DE)**

(54) **Verfahren und Vorrichtung zur Beseitigung der Säure- und Schwermetallverunreinigungen aus Flüssigkeiten.**

(57) Verfahren zur Beseitigung der Säure- und Schwermetallverunreinigungen aus Flüssigkeiten, insbesondere sauren Abwässern sowie den aus den Schornsteinen der Verbrennungsanlagen der Industrie und der Haushalte abfließenden sauren Kondensaten, bei dem die Flüssigkeit in einen ein basisches Neutralisationsmittel enthaltenden Behälter geleitet und nach einer für die Neutralisation ausreichenden Reaktionszeit abgeführt wird. Die Neutralisation erfolgt mit einem im wesentlichen Basen der 2. Hauptgruppe des periodischen Systems , insbesondere Magnesium-Hydroxid enthaltenden pelletierten Material erfolgt, wobei die Flüssigkeit vor Eintritt in die Neutralisationsstufe zunächst durch eine Schüttung von Organo-Bentonit enthaltenden Pellets und nach der Neutralisation durch eine Schüttung von im wesentlichen Eisen-III-Hydroxid enthaltenden Pellets geleitet wird. Zur Beseitigung der Säure- und Schwermetallverunreinigungen aus den Schornsteinen der Verbrennungsanlagen der Industrie und der Haushalte abfließenden sauren Kondensate werden die die Rauchgase in einer Vorreinigungsstufe zur Beseitigung der in den Rauchgasen enthaltenen flüchtigen säurebildenden Schadstoffe, durch jeweils eine Schüttung von pelletierten Reaktionsmaterialien geleitet werden, die im wesentlichen Magnesium-Hydroxid bezw. Mangandioxid und/oder Dimangantrioxid enthalten.

EP 0 454 948 A2

EP 0 454 948 A2

Die Erfindung geht aus von einem Verfahren zur Beseitigung der Säureverunreinigungen aus Flüssigkeiten nach dem Oberbegriff des Patentanspruches 1.

Die Reinigung von Abwässern ist nach wie vor ein nur unbefriedigend gelöstes Problem. Dies gilt sowohl für die in großer Menge in der Industrie und den Haushalten anfallenden Abwässer als auch insbesondere für die sich in den Rauchgasanlagen der mit fossilen Brennstoffen betriebenen Heizungsanlagen bildendenden und abfließenden Kondensate. Dies ist nicht nur begründet durch die große Zahl von - etwa in Form von Haus- oder Etagenheizungen - betriebenen Anlagen und den sich hieraus ergebenden erheblichen mit dem Sammeln, Aufarbeiten und Neutralisieren erforderlichen Aufwand an Material, Wartung und Pflege, sondern auch die Art und Menge der mitgeführten Schadstoffe. Das wesentliche Problem insoweit bilden neben den hochkonzentrierten Säure-Verunreinigungen, die die Einleitung in den Vorfluter ausschließen, die sowohl in den üblichen Abwässern als auch in den genannten Kondensaten mitgeführten Schwermetallverunreinigungen.

Die von der Umwelt gestellten Anforderungen gehen somit nicht nur auf eine möglichst vollständige Reinigung der Abwaässer von ihren Schadstoffen sondern darüberhinaus auf die Einleitung der gereinigten Abwässer in das Kanalnetz in einer möglichst pH-neutralen Form, wobei darüberhinaus - bezogen auf Heizungsanlagen - eine möglichst weitgehende Wärmeausnutzung erzielt werden soll. Diese Forderung erscheint durch Kesselisolierung und Senkung der Abgastemperaturen weitgehend erfüllt, es treten jedoch durch diese Absenkung der Abgastemperatur besondere Probleme auf im Hinblichk darauf, daß Schwefelsäure bei einer Tempeatur unter 125⁰ C und Wasser unter den gegebenen Betriebsbedingungen ebenfalls bei ca 60⁰ C kondensiert. Die Folge dieser Maßnahmen ist u.a., daß die abgekühlten abgase nicht mehr selbstständig im Kamin aufsteigen, zu ihrer Abführung somit ein Gebläse installiert werden muß.

Zur Verringerung der sich hierdurch ergebenden Belastungen werden die sog. "Brennwertkessel" heute mit zwei Wärmetauschern versehen, von denen der erste der Abkühlung des Abgases auf eine über dem taupunkt liegende Tempertur dient, während in dem zweiten - gleichzeitig der Abführung des Kondensates dienenden - Wärmetauscher die Abkühlung unter den Taupunkt erfolgt.

Im üblichen Heizbetrieb fallen bei der Verbrennung von Heizöl 0,8 - 1,15 kg/l Wasser und bei der Verbrennung von Erdgas ca 1,4 - 1,7 kg/m³ Wasser gebildet, so daß in einer gut dimensionierten Heizung eines Einfamilienhauses ca 700 - 1500 Liter Wasser (Öl) bezw. 1500 - 3000 Liter (Erdgas) Kondensat mit pH-Werten extrem unter 1 (starke Säure) pro Heizperiode anfällt. Diese enthalten insbesondere Salpetersäure und salpetrige Säure, die eine Korrodierung der Metalloberflächen der Heizungsanlage bewirkt und deren Einleitung in das öffentliche Kanalnetz auf erhebliche Bedenken stößt, auch dann, wenn durch Vermischung mit anderen Abwässern eine gewisse Verdünnung bezw. Neutralisation angenommen werden könnte. Die Einleitung der Kondensate aus Feuerungsanlagen mit über 25 kW Leistung ist aus diesem Grunde grundsätzlich verboten, für die Reinigung der aus den Schornsteinanlagen kleinerer Brennanlagen abfließenden Kondensate werden sog. Neutralisationsboxen eingesetzt, die ein basisches Neutralisationsmittel enthalten und in die das Kondensat zum Zwecke der Neutralisierung von unten eingeführt wird, wobei die Boxen mit einem Überlauf versehen sind, über den nach Füllung der Box die neutralisierte Flüssigkeit abläuft.

Die bekannten Neutralisationsboxen genügen den an sie gestellten Anforderungen nicht. Abgesehen davon, daß diese Einrichtung nicht der Reinigung der in der Heizungsanlage entstehenden Abgase sondern lediglich der Neutralisation der mit dem Kondensat abfließenden, d.h. der mehr oder weniger zufällig in löslicher Form im Rauchgas vorliegenden Teile der säurebildenden Schadstoffe dient, hat sich gezeigt, daß die bekannte Einrichtung auch die ihr zugedachte Aufgabe nur unvollkommen zu erfüllen vermag insofern, als sich das in das Neutralisationsgefäß vorgelegte Material bereits innerhalb kurzer Zeit verbraucht, so daß entweder ein entsprechend großer Behälter - für den ausreichend Platz in vielen Fällen nicht zur Verfügung steht - installiert oder innerhalb kurzer Zeitabstände, d.h. mehrfach während einer etwa sechs bis sieben Monate während Heizperiode, eine Materialerneuerung vorgenommen werden muß mit den sich zwangsläufig ergebenden Folgen im Falle einer ungenügenden oder verspäteten Wartung. Ein weiterer wesentlicher Nachteil der bekannten Einrichtungen ist auch darin zu sehen, daß das Neutralisationsmittel aufgrund der übermäßig langen Verweilzeit der Flüssigkeit in unmittelbarem Reaktionskontakt und - sofern es nicht überhaupt als Lösung im Überschuß zugegeben wird - seiner in der Regel nicht zu unterschätzenden Löslichkeit zu beachtlichen, bis zur Sättigung reichenden Anteilen in der Flüssigkeit in Lösung geht und damit zu einer beträchtlichen Versalzung führt selbst in unerwünschter Weise als Schadstoffbestandteil der Flüssigkeit wirkt, der eine Einleitung in den Vorfluter verbietet. Darüberhinaus werden im Abwasser und insbesondere in den genannten Kondensaten beachtliche Anteile an Schwermetallverbindungen in gelöster oder suspendierter Form mitgeführt, die bisher völlig unbeachtet bleiben und bei Übertritt mit dem Kondensat in das Abwasser zu einer erheblichen Umweltbelastung führen, was die wesentliche Ursache dafür darstellt, daß die preisgünstig herstellbaren und arbeitstechnisch bequemen Schornsteine aus Stahl

2

bisher nicht in verstärktem Umfang Eingang in die Praxis gefunden haben.

Der vorliegenden Erfindung liegt als Aufgabe die Schaffung eines Verfahrens zugrunde, mit dessen Hilfe bei geringem, d.h. quasi-stöchiometrischem Materialverbrauch Abwässer, insbesondere die aus den industriellen und privaten Anlagen zur Verbrennung fossiler Brennstoffe abfließenden sauren Kondensate gereinigt und von ihren Säure-und Schwermetall-Schadstoffen befreit, d.h. unter den gesetzlich als umweltverträglich vorgegegebenen Grenzwert neutralisiert und gereinigt werden können.

Diese Aufgabe wird mit einem Verfahren mit den im Patentanspruch 1 wiedergegebenen Merkmalen gelöst.

Durch die Erfindung ist ein Verfahren geschaffen, mit dessen Hilfe auf einfachste Weise auf chemischem Wege die wesentlichen Verunreinigungen einschließlich der insbesondere große Probleme verursachenden Schwermetalle aus Flüssigkeiten entfernt werden können. Hierbei ermöglicht das erfindungsgemäße Verfahren insbesondere die Beseitigung dieser Verunreinigungen aus den Rückflußkondensaten der Rauchgase sondern darüberhinaus eine weitergehende Reinigung der Rauchgase selbst in der Weise, daß die in dem Rauchgas enthaltenen säurebildenden Schadstoffbestandteile - soweit sie nicht bereits in dieser Form vorliegen - in eine wasserlösliche Form gebracht werden, so daß ihre Beseitigung aus dem Rauchgas bis auf einen weit unterhalb der derzeit geltenden Maximalwert liegenden Gehalt erzielt wird, wobei durch das Aufbringen des abfließenden Kondensats auf ein im wesentlichen trockenes, d.h. zum Unterschied zu den bekannten Einrichtungen nicht in einem Flüssigkeitssumpf lagerndes Neutralisationsmittel ein außerordentlich sparsamer Verbrauch an Neutralisationsmittel gewährleistet werden kann. Es kann somit bei außerordentlich geringem Materialverbrauch eine vollständige Rauchgasreinigung erzielt werden, so daß mit relativ kleinen Absorbern ( Neutralisationsboxen-/Patronen ) die Reinigung der Abgase aus etwa einer Einfamilienhaus-Heizung während einer gesamten Heizperiode ohne Nachfüllung möglich ist. Das Verfahren eignet sich somit ausgezeichnet auch zur nachrüstenden Anwendung in bestehenden Gebäuden. Darüberhinaus wird aufgrund der Nachschaltung einer Korrekturpellets enthaltenden Umsetzungsstufe nach der Neutralisationsstufe selbstregelnd ein pH-Wert von unter 9 und damit eine Abwasserqualität erreicht, die eine unbedenkliche Einleitung in das allgemeine Abwassernetz erlaubt.

In weiterer Ausgestaltung der Erfindung erfolgt die Durchführung des Verfahrens der Erfindung in einem Umsetzungsbehälter, der aus einem aus einem das pelletierte Reaktionsmaterial enthaltenden Absorber besteht, der auf der Einlaufseite mit einer Einrichtung, beispielsweise einer Lochplatte, zur gleichmäßigen Verteilung der von oben tropfenweise zufließenden Flüssigkeit auf die Oberfläche der Reaktionsmaterialien versehen ist, wobei die Verteileinrichtung in einer besonders vorteilhaften Ausführungsform der Erfindung als Stauscheibe ausgebildet ist, mit deren Hilfe in dem in Fließrichtung vor der Scheibe gelegenen Raum zur Erzielung eines im wesentlichen konstanten Staudruckes eine gleichmäßige Säule an Rohkondensat bezw. Abwasser aufrecht erhalten wird.

In einer besonders vorteilhaften Ausführungsform der Erfindung kann der Absorber die Form einer Rinne aufweisen, in der durch Stauscheiben Reaktionskammern abgeteilt, die der Homogenisierung, der Neutralisation sowie der pH-Wert-Korrektur des Kondensates dienen, wobei durch die Wahl der Neigung der Rinne die Verweilzeit des Kondensates im Reaktionsraum bestimmt wird und die als Überlauf dienenden Stauscheiben in im wesentlichen vertikaler Lage in der Rinne angeordnet sind.

Der Absorber kann jedoch auch die Form einer runden Patrone (Rundbox) aufweisen, wobei die Stauscheibe aus einer mit gleichmäßig auf der gesamten Fläche verteiltem Rundlöchern versehenen Scheibe besteht, deren Gesamtddurchflußquerschnitt der Löcher sich nach der Gleichung

$$T = \frac{2F \times (\sqrt{H_1} - \sqrt{H})}{Phi \times F_0 \times \sqrt{2g}}$$

bemißt, in der

| | | | |
|---|---|---|---|
| T | = | Zeit in sec | |
| F | = | Gesamtfläche der Lochplatte | $(m^2)$ |
| Fo | = | Gesamtfläche der Löcher | $(m^2)$ |
| H1 | = | Stauhöhe der Lochplatte | (m) |
| H | = | Nullstau auf der Lochplatte | (m) |
| g | = | Gravitations-Konstante | |
| Phi | = | Formkoeffizient für die Löcher | |
| | | (gleichmäßig rund = 0,62) | |

bezeichnen

Weitere Ausführungsformen und Vorteile ergeben sich aus der nachfolgenden Beschreibung, in der die Erfindung anhand der beiliegenden Zeichnung beispielsweise erläutert ist. Es zeigen

Fig. 1      eine schematische Darstellung einer Anlage zur Reinigung der Abgase aus Heizungsanlagen mit einer Ausführungsform eines Neutralisations-Absorbers

Fig. 2      einen Teilschnitt durch eine Absorberpatrone zur Neutralisation des abfließenden Kondensats

Fig. 3      eine schematische Darstellung der in Fig. 2 wiedergegebenen Absorberpatrone in vergrößerter Wiedergabe

Fig. 4      einen Teilschnitt durch eine mehrere Absorberpatronen gemäß Fig. 2 enthaltenden vergrößerte Absorbereinheit

Fig. 5      eine Sicht von oben auf Fig. 4

Fig. 6, 7      einige Aufbausysteme von Neutralisationsboxen für unterschiedliche Leistungen

Fig. 8      die Darstellung einer Neutralisationsbox für volle Füllung

Fig. 9      die Darstellung einer Neutralisations-Rundbox

Fig. 10      die Darstellung einer anderen Ausführungsform einer Neutralisations-Box (Rinnen-Box) mit Stauscheibe

Fig. 11      eine weitere Ausführungsform einer Neutralisations-Box (Rund-Box) mit Stauscheibe

Fig. 12      eine weitere Ausführungsform einer Neutralisations-Box (Leitungs-Patrone) mit Stauscheibe

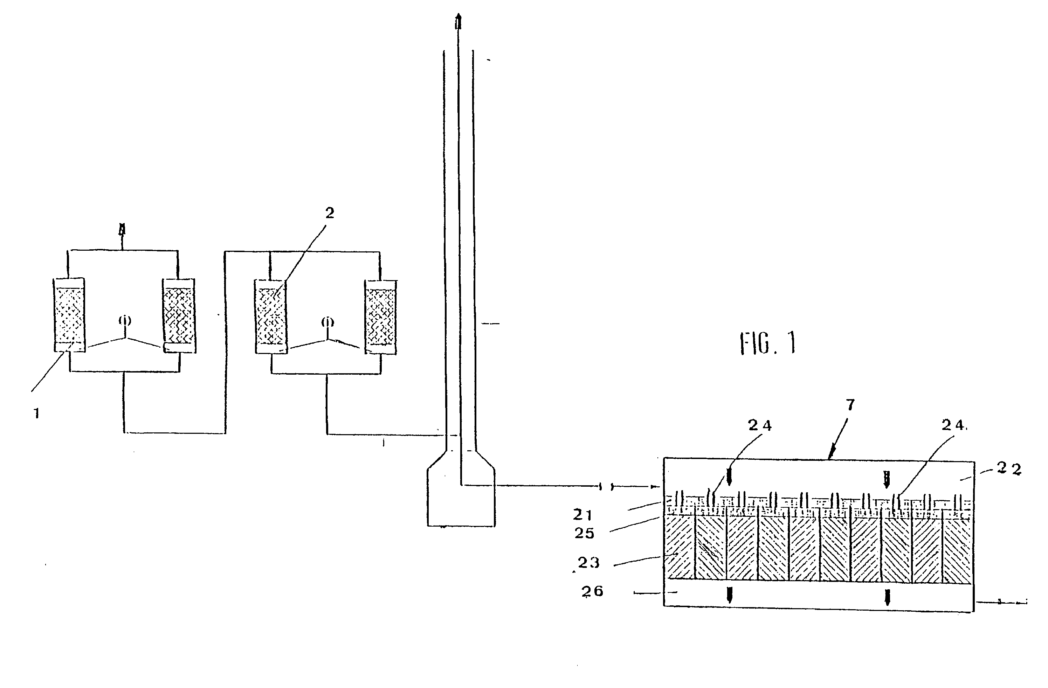

Fig. 1 der Zeichnung zeigt eine Reinigungsanlage für das Rauchgas aus einer Verbrennungsanlage für fossile Brennstoffe. Sie besteht aus der Vorreinigungsstufe mit zwei Doppelabsorbern 1, 2, dem Schornstein 6 sowie der Absorbereinheit 7 zur Neutralisation des aus dem Schornstein 6 rückfließenden Kondesats.

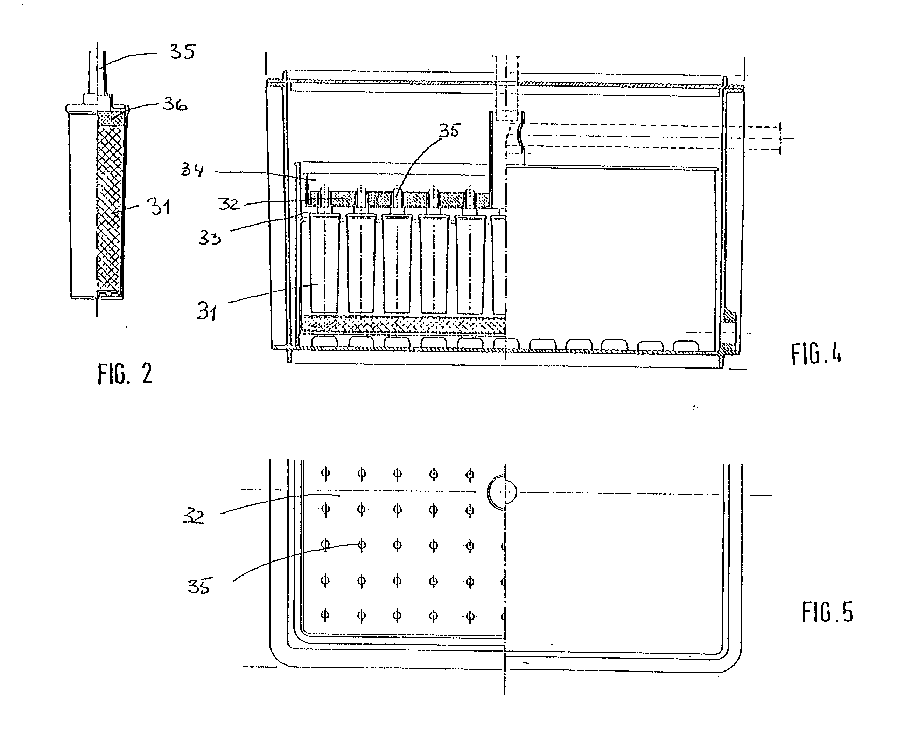

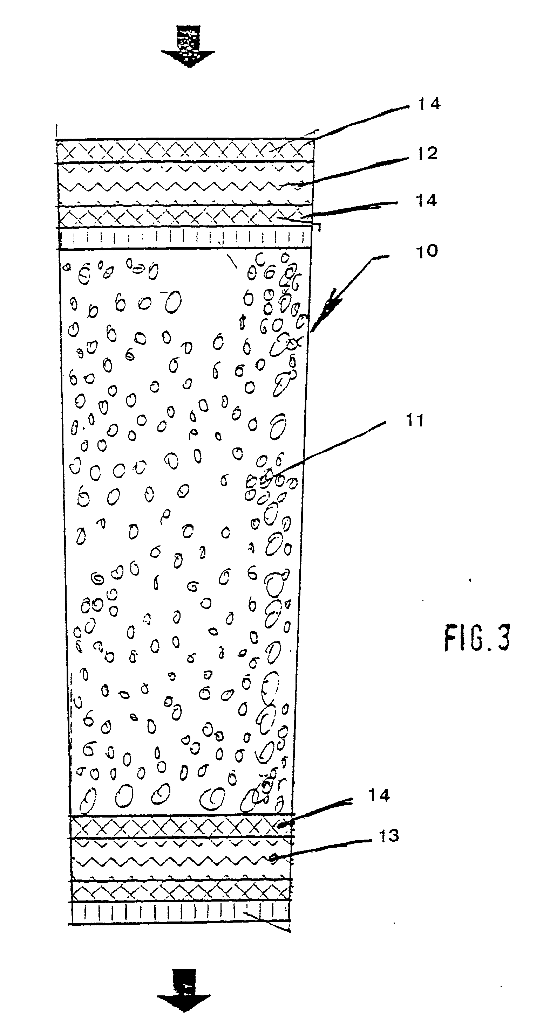

Hierbei erfolgt die Neutralisation mit - siehe auch die eine Absorberpatrone 10 wiedergebende Fig. 3 - in einer Schüttung 11 aus einem im wesentlichen Basen der 2. oder 7. Hauptgruppe des periodischen Systems, insbesondere Magnesium-Hydroxid enthaltenden pelletierten Material, wobei die Flüssigkeit vor Eintritt in die Neutralisationsstufe zunächst durch eine Schüttung 12 von Organo-Bentonit enthaltenden Pellets und nach der Neutralisation durch eine Schüttung 13 von im wesentlichen Eisenhydroxid enthaltenden Pellets geleitet wird. Die Reaktionsmaterialien in den Schüttungen 11, 12 und 13 sind durch Lagen 14 aus Filtermaterial getreilt. Hierbei dient die pelletiertes Organo-Bentonit enthaltende Vorreinigungsstufe der Beseitigung von in der Flüssigkeit enthaltenen Halogen-Kohlenwasserstoffen und Kohlenwasserstoffen, während die im wesentlich von Eisen-hydroxid enthaltende Nachreinigungsstufe 13 der Einstellung des pH-Wertes der Flüssigkeit auf einen unter dem Gesichtspunkt der Umweltverträglichkeit optimalen pH-Wert von 8,5 - 9 dient. Darüberhinaus absorbiert das in alkalischem Medium koloidal vorliegende Eisen-III-Hydrooxid die in feinster Form ausgefällten Schwermetal-Hydroxide, die in dem Preßwattefilter quantitativ aufgefangen werden.In dieser Form eignet sich das erfindungsgemäße Verfahren insbesondere zur Reinigung von in großen Mengen anfallenden, Säureverunreinigungen und/oder Schwermetalle enthaltenden Abwässern, wobei selbstverständlich anstelle eines lediglich von einer Patrone gebildeten Absorbers eine aus einer Vielzahl von Absorbern bestehende Einheit im Sinne der Fig. 1 oder 4 zum Einsatz kommt.

Im Falle der in der Zeichnung beispielsweise wiedergegebenen Anlage zur Reinigung und Neutralisation der aus dem Schornstein 6 abfließenden säurehaltigen Kondensate wird darüberhinaus in einer Vorreinigungsstufe das Rauchgas nach Verlassen des Brennraumes und vor Eintritt in die Rauchgasanlage 6 zur Beseitigung der in den Rauchgasen enthaltenen flüchtigen säurebildenden Schadstoffe, insbesondere Schwefeldioxid, Schwefeltrioxid, weiterhin der Stickoxide sowie der Kohlen-, Chlorkohlen- und Halogenwasserstoffe einerseits und zur Teiloxidation von Stickstoffmonoxid, Schwefeldioxid und Kohlenmonoxid andererseits durch jeweils eine Schüttung von pelletierten Reaktionsmaterialien geleitet, von denen die der Teiloxidation der Stickoxide bis zur Erreichung etwa äquimolarer Mengen an Stickstoffmonoxid und Stickstoffdioxid dienenden Pellets - Absorber 2 - im wesentlichen Mangandioxid und/oder Dimangantrioxid

4

EP 0 454 948 A2

(MnO$_2$, Mn$_2$O$_3$) enthalten und darüberhinaus einen Gehalt an anderen Oxidationsmitteln, beispielsweise Kaliumchlorat und/oder Wasserstoffperoxid, in einer Gesamtmenge zwischen 3 und 8 Gew.-%, vorteilhaft zwischen 4 und 5,5 Gew.-% aufweisen können.

Die der Beseitigung der flüchtigen säurebildenden Schadstoffe dienenden Pellets in der Vorreinigungsstufe - Absorber 1 - sowie die der Neutralisierung der Säuren der Flüssigphase in der Hauptstufe - Absorber 7 - dienenden Pellets bestehen demgegenüber aus Oxid- bezw. Hydroxid eines Metalls der 2. Hauptgruppe des periodischen Systems, insbesondere Magnesiumoxid bezw. Magnesiumhydroxid in einer Menge zwischen 60 und 70 Gew.-%, vorteilhaft 64,5 Gew.-%, sowie Eisen-III-Oxid in einer Menge zwischen 3 bis 12 Gew.-%, vorteilhaft 3,5 bis 5,0 Gew.-%. Sie weisen zweckmäßig eine Porosität (der Schüttung) von 0,05 bis 0,15 bei stark unterschiedlichem Durchmesser auf und kommen im Absorber in einer solchen Mischung zum Einsatz, daß sich insgesamt ein gerütteltes Schüttgewicht von 1,050 bis 1,250 kg/l ergibt. Hieraus ergibt sich in Verbindung mit der mit zwischen 1 und 3° konisch geneigten Form der Absorberpatronen die überraschende Wirkung der Aufhebung des sog. "Wandeffektes", aufgrund dessen in Schüttungen ablaufende Flüssigkeiten bevorzugt an der Wand abfließen mit der Wirkung einer entsprechend stark reduzierten Kontaktzeit zwischen der Flüssigkeit und dem Reaktionsmaterial. Bei Einhaltung der dargestellten Parameter der Porosität, des Schüttgewichtes und der Wandkonizität der Patrone erfolgt Aufhebung dieses Wandeffektes in dem Sinne, daß die abtropfende Flüssigkeit durch die kleineren Pellets in das Innere der Schüttung abgelenkt und damit ein intensiver Kontakt zwischen der Flüssigkeit und dem Reaktionsmaterial sichergestellt wird.

Darüberhinaus verhindert die Konizität erheblich die Verminderung der effektiven Höhe der Pelletschüttung während der Wirkphase insofern, als hierdurch eine Querschnittsverringerung der Patrone bewirkt wird, die in etwa der durch die chemische Umsetzung verursachten Verringerung des Durchmesers der Pellets entspricht. Es tritt somit ein - bezogen auf den tatsächlichen Materialverbrauch - relativ geringeres zeitliches Absinken der Pelletsäule statt, so daß die volle Wirksamkeit der Patrone über eine relativ längere Zeit erhalten bleibt. Ausgehend von einer Füllhöhe von 100 bis 120 mm, einer Konizität von zwischen 1° und 3° und einer mittleren hydraulischen Belastung in der angegebenen Höhe von zwischen 0,03 und 0,08, vorzugsweise etwa 0,05 1/cm$^2$xh kann damit gerechnet werden, daß eine Erneuerung oder Ergänzung der Füllung während einer vollständigen Heizperiode von 6 Monaten nicht erforderlich wird.

Es werden weiterhin besonders vorteilhaft die als Neutralisationsmittel dienenden Pellets aus Reaktionsmaterialien mit stark unterschiedlichen Löslichkeitsprodukten für die zu neutralisierenden Säuren hergestellt, wobei die Herstellung zweckmäßig in der Weise erfolgt, daß die pulverförmigen Materialien zunächst in einer ersten Stufe mit einer geringen Menge an Wasser vorpelletiert und nach Bildung von Keimen einer Größe zwischen 0,05 und 0,15 mm durch Zugabe von weiterem Pelletierwasser zu Pellets verbunden werden. Mit Hilfe der so gebildeten, eine hohe Dichte aufweisenden Pellets wird in Verbindung mit der vorstehend beschriebenen Aufhebung des Wandeffektes bei optimaler, d.h. vollständiger Neutralisierung der Säurebestandteile auch in großer Verdünnung eine dosiert gepufferte Auslösung des Reaktionsmaterials aus den Pellets erreicht und damit die Bildung einer übermäßigen Konzentration des Reaktionsmaterials in der Flüssigkeit verhindert. Diese Wirkung beruht auf dem Umstand, daß die leichter löslichen Materialien von einer übermäßigen Auslösung und damit Konzentration in der Lösung durch die schwerer bis schwerstlöslichen Materialien geschützt werden. Durch die Konizität des Absorbers wird hierdurch sowie die stark unterschiedliche Größe der Pellets und dem entsprechend hohen Schüttgewicht erreicht, daß die Höhe der Pelletsäule unterproportional zum Materialverbrauch absinkt, so daß eine ausreichende Kontaktzeit der abtropfenden Flüssigkeit zur Neutralisation der Säurebestandteile ungeachtet des Materialverbrauchs auch über längere Zeiträume hinweg sichergestellt ist. Es stellt dies die Grundlage dafür dar, daß die Entgiftung der Rauchgase und der daraus abfließenden Kondensate auch relativ leistungsstarker Heizungsanlagen mit geringem Materialeinsatz erfolgen kann, so daß eine Wartung bezw. ein Austausch der Patronen nur in größeren Zeitabständen, etwa jeweils nach einer oder sogar zwei Heizperioden erforderlich wird. Ein weiterer wesentlicher Vorteil des Verfahrens der Erfindung ist auch darin zu sehen, daß gleichzeitig mit der Neutralisierung der Abwässer auch eine vollständige Beseitigung der Schwermetalle erzielt wird, die bei dem allmählichen Übergang des Abwassers aus der sauren Phase in die basische Phase aus der Lösung in solchen Partikelgrößen ausfallen, daß sie zunächst physikalisch an der Oberfläche der Pellets gebunden sind und beim Auswaschen aus der Pelletschüttung in einer Spezialfilterschicht aufgefangen werden können, die im wesentlichen aus kolloidalem, stark absorbierende Lösungen bildendem Fe-III-Hydroxid besteht.

Als Material mit höherem Löslichkeitsprodukt kommen vorteilhaft die Oxide bezw. Hydroxide des Eisens und/oder Zinks in einer Gesamtmenge von 5 bis 15 Gew.-%, vorteilhaft 8 bis 10 Gew.-%, bezogen auf Aktivmasse der Neutralisationspellets, zum Einsatz.

In einer weiteren, insbesondere für Großanlagen der Wasser-Reinigung geeigneten, in Fig. 1 wiederge-

5

gebenen Ausführungsform kann der Absorber aus zwei voneinander durch einen Trennboden 21 getrennten Kammern 22, 23 bestehen, von denen die vor dem Trennboden liegende, als Verteilerkammer dienende Kammer 22 von der hinter dem Trennboden liegenden Absorberkammer 23 flüssigkeitsdicht getrennt ist und die Verteilerkammer 22 mit der Absorberkammer 23 mittels einer Vielzahl von das zufließende Kondensat gleichmäßig verteilenden Überlaufleitungen 24 verbunden ist. Eine Filter-bezw. Flies-Schicht bewirkt eine gleichmäßige Verteilung der flüssigkeit auf der Oberfläche des Reaktionsmaterials. Unterhalb der Absorberkammer befindet sich ein Reinkondensat-Sammelraum 25, aus dem das Kondensat abgezogen werden kann.

In Fig. 4 ist eine weitere, aus einer Vielzahl von Absorberpatronen gemäß Fig. 2 bezw. 3 gebildete Absorbereinheit wiedergegeben. Sie besteht außer den mit 31 bezeichneten Absorberpatronen aus einem der gleichmäßigen Verteilung des zufließenden Kondensats auf die Patronen dienenden Verteilerraum, der seinerseits zwei durch eine Filterschicht 32 voneinander getrennte Kammern 33, 34 umfaßt, von denen die in Strömungsrichtung des Kondensats vor der Filterschicht liegende Kammer 33 von den Patronen 31 flüssigkeitsdicht getrennt ist und die in Strömungsrichtung des Kondensats hinter der Filterschicht liegende Kammer 34 mit den Patronen 31 mittels einer der Zahl der Patronen entsprechenden, das zufließende Kondensat gleichmäßig verteilenden Zahl von Überlaufleitungen 35 verbunden ist. An dem auf der Seite der Patronen 31 gelegenen Ende der Überlaufleitungen 35 ist eine der gleichmäßigen Verteilung des zufließenden Kondensats auf die gesamte Querschnittsfläche der Patronen dienende Filter- oder Verteilerschicht 36 vorgesehen, die ebenso wie die Filterschicht 32 aus einem halbgepreßten Flies aus Glaswatte, einem porösen Einsatz aus gesintertem oder gepreßten keramischen Material oder einer anderen für diesen Zweck geeigneten Struktur bestehen kann. Diese Ausführungsform hat den besonderen Vorteil, daß sie den modulartigen Aufbau einer den jeweiligen Bedürfnissen entsprechenden Reinigungsanlage aus nur wenigen standardisierten Elementen ermöglicht.

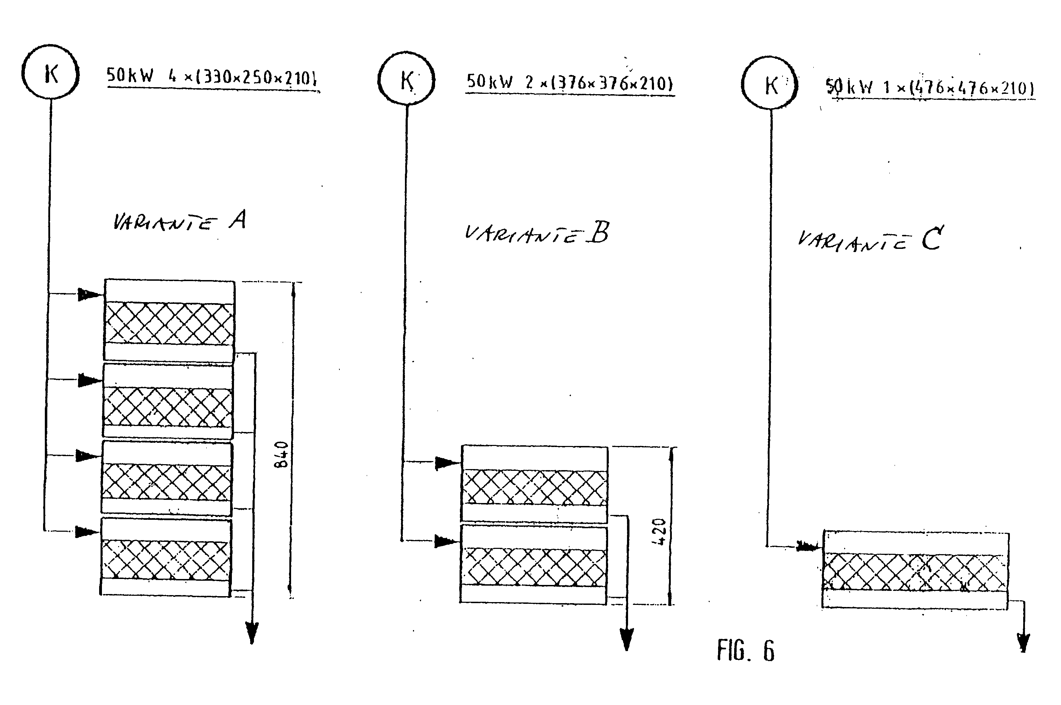

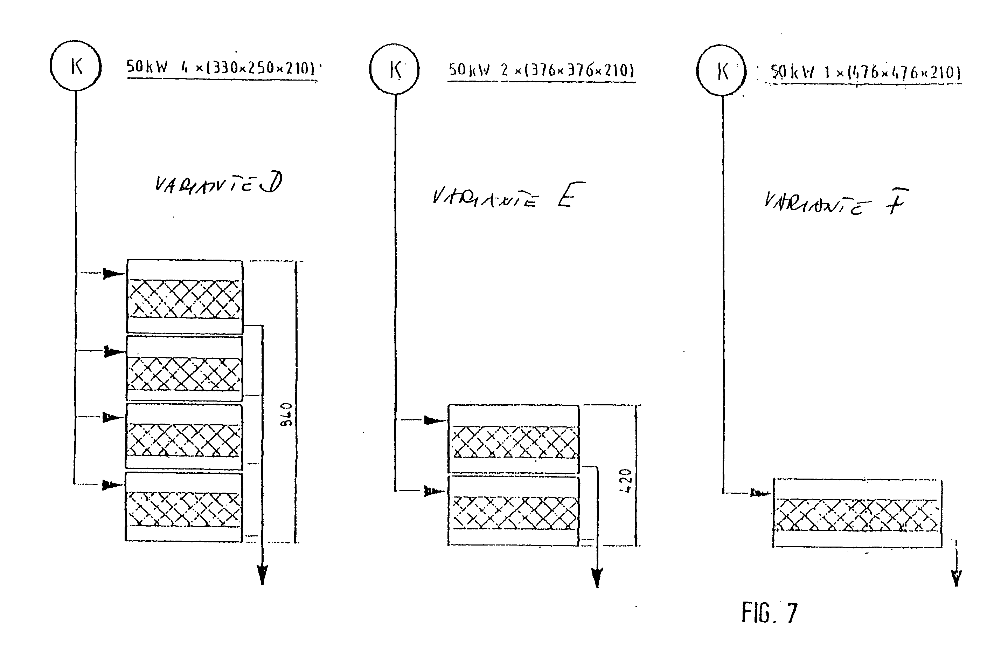

In den Fig. 6 und 7 der Zeichnung sind in den Variationen A bis C bezw. D bis F auf der Grundlage gleicher Leistung - Reinigung der Abgase einer 50 kW-Kesselanlage - einige Möglichkeiten zur Gestaltung von Boxen bezw. Aufbau-Systemen zur Erzielung der geforderten Leistung und in den Variationen D bis F Aufbausysteme für höhere Leistungen auf der Grundlage einer Box der Variation C wiedergegeben. Die Zeichnung verdeutlicht anschaulich, daß mit dem erfindungsgemäßen System aufgrund von Standardisierung und entsprechender Steuerung des Kondensatflusses bei geringstem Platzbedarf ein jeder Leistungsanforderung genügendes Reinigungssystem erstellt werden kann.

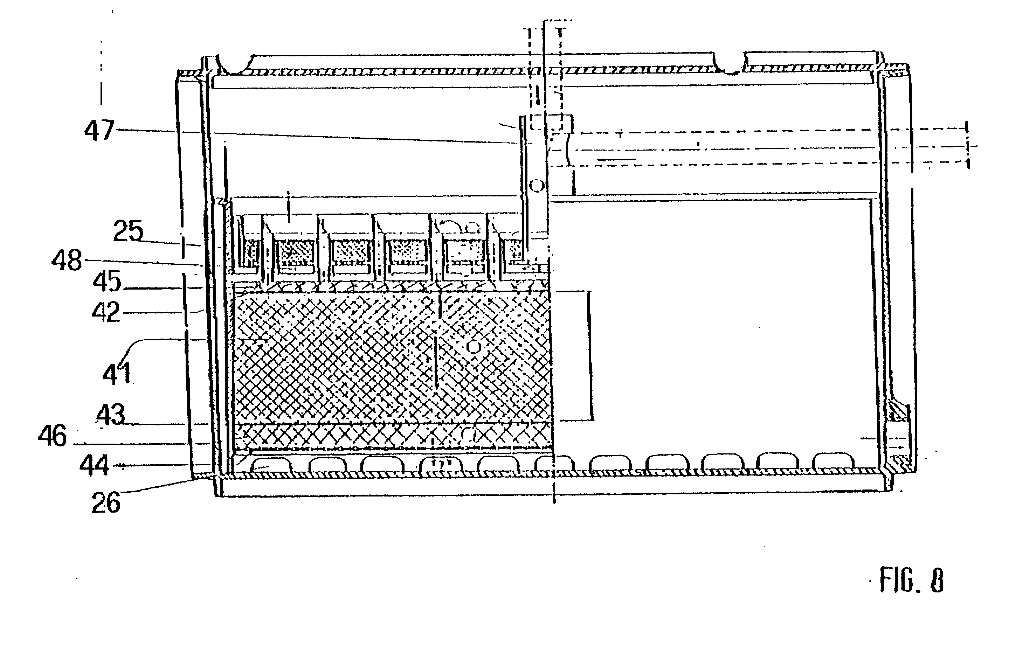

In Fig. 8, in der im übrigen die entsprechenden Teile mit denselben Bezugsziffern versehen sind wie in Fig. 4, ist eine Neutralisationsbox mit voller, d.h. nicht aus einzelnen Patronen aufgebautem Reaktionsraum wiedergegeben. Sie umfaßt den mit Pellets gefüllten Reaktionsraum 41, der beidseitig von einer durch Lochplatten 42, 43, 44 getrennten Filtermatten 45, 46 eingeschlossen sind. Bei deiser Ausführungsform erfolgt der Zulauf des Kondensates über den Einlauf 47 , den Verteilerraum 48 sowie die Filtermatte 25, an der die festen Partikel zurückgehalten werden. Nach Passieren der Überlaufrohre wird das Kondensat an der Filterschicht 45 gleichmäßig auf die gesamte Fläche verteilt und gelangt von dort in den Reaktionsraum, in der die Säure neutralisiert und die weiteren Umsetzungen durchgeführt werden. Nach Durchströmen der weiteren Filterschicht 46 gelangt das gereinigte Kondensat in den Sammelraum 26, aus dem es abgezogen wird.

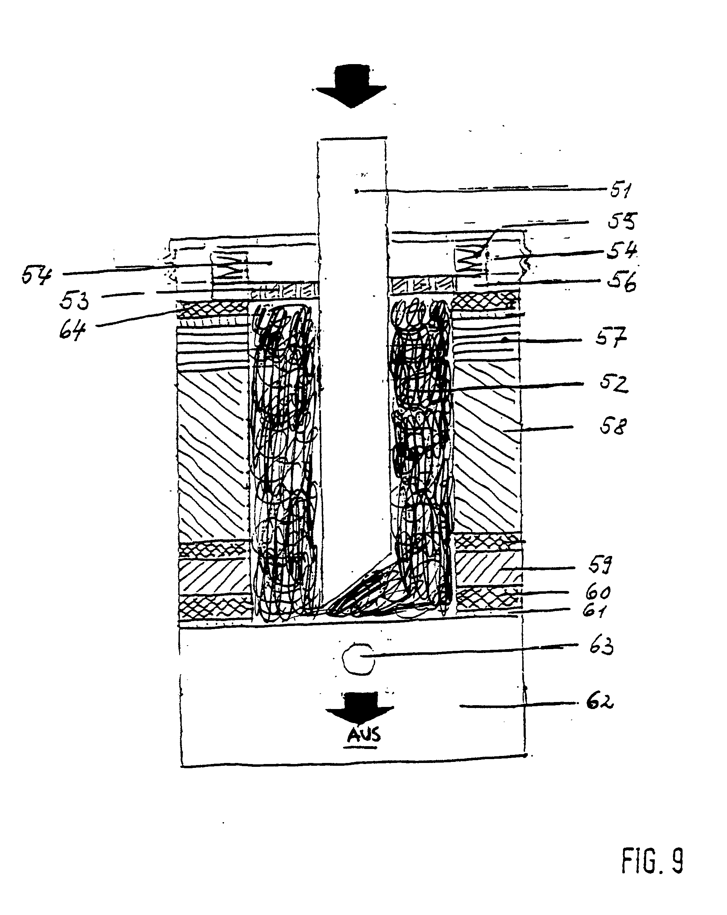

In Fig. 9 ist eine Ausführungsform einer Rundbox mit dem mittleren vertikalen Zulauf 51, an dessen Stelle auch ein seitlicher Zulauf vorgesehen sein kann. Der Zulauf 51 geht über seine Öffnung am unteren Ende in einen ihn konzentrisch umgebenden Filterraum 52 über, der vollständig mit Filterwatte gefüllt und an seinem oberen Ende von einer Lochplatte 53 begrenzt ist, durch die die Flüssigkeit in den Verteilerraum 54 einströmt. Der Verteilerraum ist gegenüber dem eigentlichen Reaktionsraum begrenzt durch eine Watteschicht, der jedoch in diesem Falle lediglich Verteilerfunktion zukommt. Sie bewirkt eine absolut gleichmäßige Verteilung des zuströmenden Kondensats auf den gesamten Querschnitt, wodurch insbesondere sichergestellt wird, daß das Reaktionsmaterial nicht einseitig überflutet und damit möglicherweise einseitig abgetragen wird. Ein mittels einer Feder 55 belasteter Deckel 56 sorgt darüberhinaus für eine jederzeit kompakte Lagerung des Reaktionsmaterials. Der Reaktionsraum ist gefüllt mit mehreren Reaktionsschichten und zwar zunächst der Organobentonitschicht 57, der die Neutralisationspellets enthaltende Schicht 58, die die Eisen-III-Hydroxid-Pellets enthaltende und der pH-Wert-Einstellung dienende Schicht 59, die wiederum von einer Preßwatte-Schicht 60 und einem Lochblech 61 begrenzt werden. Die neutralisierte und gereinigte Flüssigkeit tritt über in den Auffangbehälter 62, der eine für eine Verweildauer des Kondensates von mindestens 15 Minuten ausreichende Größe besitzt und aus dem das Reinkondensat nach der Verweilzeit über den Überlauf 63 abgezogen wird.

Die vorstehend beschriebenen, mit besonderem Vorteil einsetzbaren Rundboxen können nach zwei alternativen Konstruktionen gestaltet sein können. Die erste - in der Zeichnung wiedergegebene - Alternative mit einen Innenteil mit Wattefilter und zentrisch außerhalb mit Neutralisationspellets ausgefülltem Raum (Fig. 9). Die zweite Alternative beinhaltet eine Patrone in der Mitte der Box, verbunden mit einem außerhalb der Patrone (um die Patrone herum) angeordneten Wattefilterraum.

Darüberhinaus ergeben sich zu dem erfindungsgemäßen Verfahren die nachstehenden Besonderheiten:

1. Die in der 1. Vorreinigungsstufe eingesetzten magnesiumoxid-basierten Pellets dienen der Beseitigung von Halogenwasserstoffen (HCl, HF), $SO_2/SO_3$ und von Stickoxiden nach den Reaktionsgleichungen:

$$Mg(OH)_2 + HCl/HF = MgCl_2/MgF_2 + 2 H_2O$$

$$Mg(OH)_2 + SO_2 = MgSO_3 + H_2O$$

$$Mg(OH)_2 + SO_3 = MgSO_4 + H_2O$$

$$Mg(OH)_2 + 2 NO_2 + 1/2 O_2 = Mg(NO_3)_2 + H_2O$$

$$Mg(OH)_2 + N_2O_3 + O_2 = Mg(NO_3)_2 + H_2O$$

2. Die in der 2. Vorreinigungsstufe eingesetzten mangandioxid-/dimangantrioxid-basierten Pellets dienen - als oxidativer Vorgang - der quasi-katalytischen Umsetzung der Stickoxide und des Schwefeldioxids durch Einwirkung von atomarem Sauerstoff nach den Reaktionsgleichungen:

$$2 NO + O = N_2O_3$$

$$SO_2 + O = SO_3 \text{ (unter Mitwirkung von}$$

$$\text{Schwermetallen)}$$

$$MnO + N_2O_3 + 2 O = Mn(NO_3)_2$$

$$Mn(O + SO_3 = MnSO_4)$$

$$C_mH_n + (2mO + 1/2 n O) = m CO_2 + n/2 O \text{ (Kohlenwasserstoffe)}$$

$$2 C_mH_{n-1} + ((2mO + 1/2 (n-1) O)) \times 2 = m CO_2 + (n-1)/2 H_2O$$

$$\text{(Chlorkohlenwasserstoffe)}$$

$$2 Cl^- + 2 H^+ + n H_2O = 2 HCl \times n H_2O$$

In dieser 2. Vorreinigungsstufe erfolgt ebenfalls die teilweise Beseitigung des Kohlenmonoxids mit Hilfe der Manganoxid-basierten Pellets.

In mit Erdgas beheizten Zentralheizungsanlagen wird die Reihenfolge $MnO_2$ /$MnO_3$-Absorber als erste und MgO-Absorber als zweite Reaktionsstufe (1 Variante grunsätzlich NOx-Verunreinigungen) und in mit Öl beheizten Zentralheizungsanlagen wird die Reihenfolge: MgO-Absorber als erste und $MnO_2$ /$Mn_2O_3$ als zweite Reaktionsstufe (2. Variante) eingesetzt.

Der Anstieg an Feuchtigkeitsgehalt in den behandelten Rauchgasen ist wegen der verhältnismäßig kleinen Konzentrationen an umsetzbaren Schadstoffen sehr klein, die Verminderung von Schadstoffen in den im Kamin ab-fließenden Rauchgasen ist dagegen sehr groß. Die durchgeführten Versuche haben gezeigt, daß bei einer fast gleichbleibenden Feuchtigkeit (+ 1 bis 3 %) die Verminderung von säurebildenden Schadstoffen und von Schwermetallen mehr als 80 bis 90 % beträgt. Somit liegen bei gleichbleibender Kondensatmenge gemittelte pH-Werte, um ca 2 bis 3 pH-Einheiten höher. Daher resultieren kleinere Verbrauchsmengen an Neutralisationsmitteln.

Die abfließenden und aufzuarbeitenden Kondensate gelangen in den Neutralisationsabsorber, in dem die Säure neutralisiert und die Schwermetalle gefällt und abgefiltert werden. Bezugnehmend auf die hohe, durch Einsatz des erfindungsgemäßen Verfahrens erreichbaren hydraulischen Belastung, verbunden mit den neuen, quasistöchiometrischen Neutralisationspellets, die sich auf 4 500 bis 6 000 Liter Kondensat im Bereiche 2 bis 10,0 pH pro Liter Neutralisationspellets beziehen, können - im Vergleich zu den bekannten für diesen Zweck bekannten Einrichtungen, wesentlich kleinere Absorber Absorber eingesetzt werden. Je nach der Leistung und Brennstoffart einer Zentralheizungsanlage können folgende Absorber eingesetzt werden:

a) modulierte Einzelpatronen bei kleinen Anlagen mit einer Leistung bis 30 bis 40 $kW_{th}$

Diese modulierten Einzelpatronen werden vorzugsweise für Teilperioden der Zentralheizungssaison eingesetzt, weil sie einfach in die Abflußleitung montiert werden können. Aufgrund der erfindungsgemäßen Verfahrensweise genügt es, zur Entsorgung einer erdgasbefeuerten Heizungsanlage mit einer Heizleistung von 15 kW - entsprechend angenommener Kondensatanfall von 600 Liter - und monatlichem Austausch eine Patrone mit lediglich einer Füllung von nur 0,15 Liter der neuen Aktivpellets vorzusehen. Eine solche Patrone würde leicht mit einem effektiven Watte-Filter für Ruß und sonstige feste Anteile im Kondensat ausgerüstet sein können.

Für größere Anlagen und enstprechend höhere Leistungen können Patronen-System von Einzelpatronen eingesetzt werden. Diese Patronen-Systeme können als individuelle Systeme von Mehr-Patronen-Aggregaten oder aber von an eine Neutralisationsbox gebundenen Klein-, Mittel- oder Großpatronen konzipiert sein. Derartige Mehr-Patronen-Aggregate können schon bei Leistungen ab 50 kW zu reihenweise zusammenstelbaren Komplex-Aggregaten montiert werden.

Die neuen Neutralisationspellets können ohne weiteres auch in den schon im Betrieb befindlichen Neutralisationsboxen eingesetzt werden.

Die in Fig . 10 der Zeichnung wiedergegebene , als "Rinnenbox" ausgebildete Ausführungsform einer Neutralisationsbox eignet sich insbesondere zum Einbau in Räumen oder Raumteilen mit niedriger Höhe. Sie besteht aus der von einem Zufluß 72 und einer Filterkammer 73 gebildeten Zulaufkammer, aus der das Kondensat in eine Homogenisierungskammer 74 übertritt, in der darüberhinaus eine Kühleinrichtung 75 vorgesehen ist, mit deren Hilfe das Kondensat erforderlichenfalls auf die Reaktionstemperatur abgekühlt werden kann. Der Reaktionsraum ist durch drei Stauscheiben 76, 77, 78 in Kammern 79, 80, 81 geteilt, von denen die Kammern 79, 80 der Neutralisation des Kondensates und die Kammer 81 der pH-Wert-Einstellung gemäß der vorliegenden Erfindung dienen. Die Verweildauer und damit die Kontaktzeit des Kondensats wird im Falle dieser Ausführungsform weitgehend beeinflußt von dem Neigungswinkel der Rinne, der die Fließgeschwindigkeit des Kondensats und die Menge an von den Stauscheiben zurückgehaltenem Kondensat in den Zeiten eines verminderten Zulaufs an Kondensat bestimmt. Aus der Kammer 81 gelangt das Kondensat in den Überlaufbehälter, aus dem es in die Kanalisation abgelassen werden kann. Vor der Stauscheibe 78 und dem Überlauf 82 sind jeweils eine Filterschicht 83, 84 angeordnet, an der die Feststoffe, insbesondere die ausgefällten Schwermetallbestandteile aus dem gereinigten Kondensat ausgefiltert werden.

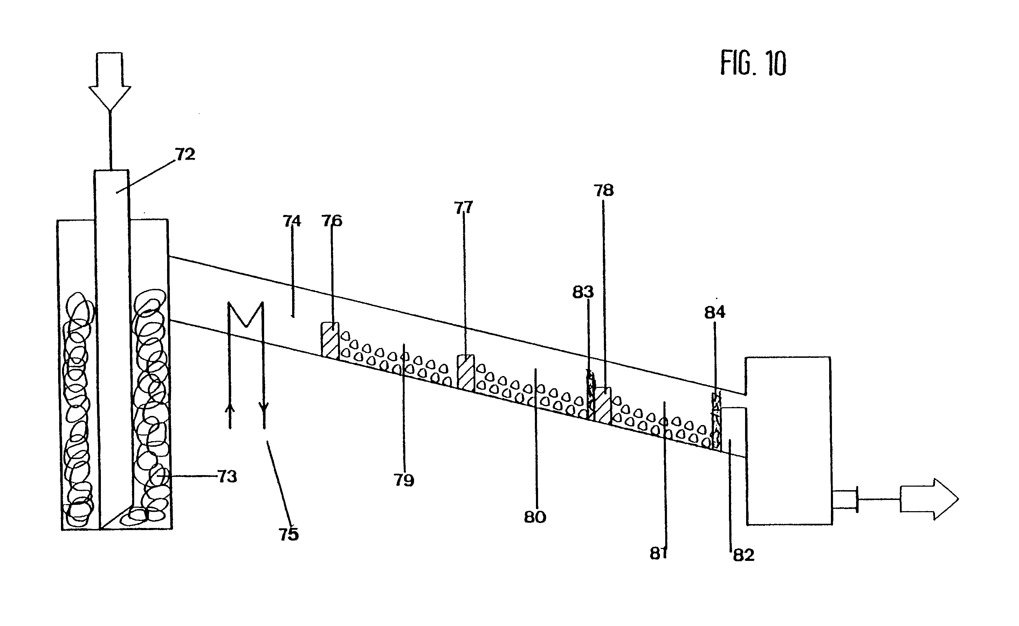

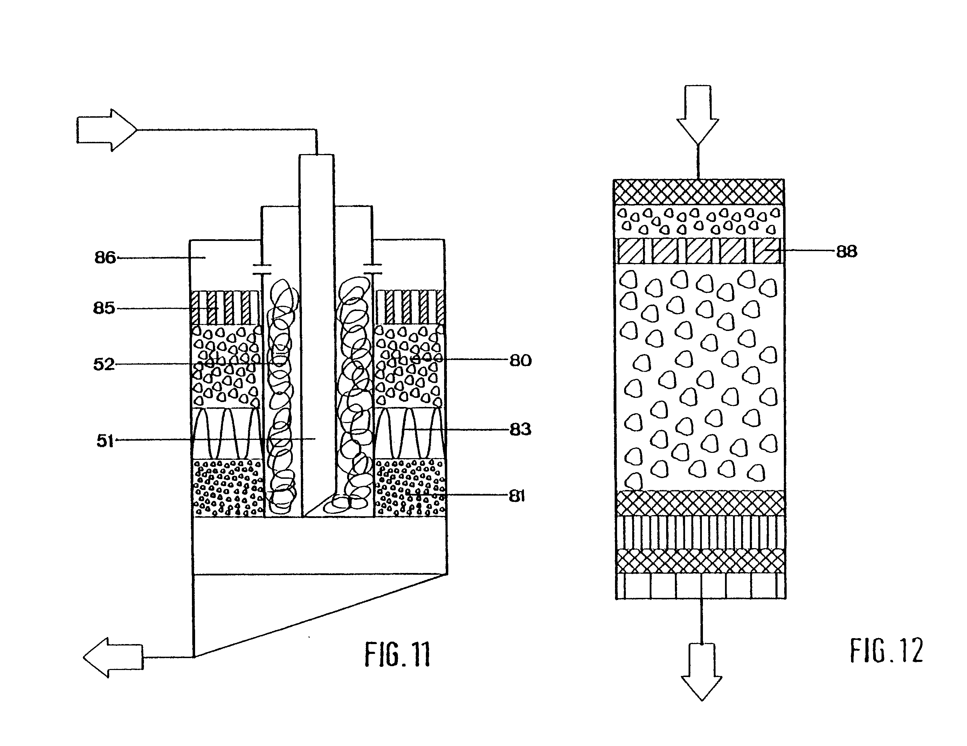

Die in Fig 11 wiedergegebene Ausführungsform der Erfindung, in der im übrigen die entsprechenden Teile mit denselben Bezugsziffern wie in Fig. 10 bezeichnet sind, entspricht konstruktiv im wesentlichen der Ausführungsform der Fig. 9 mit dem Unterschied, daß die dort als Abdeckung der Filterkammer 52 vorgesehene Lochscheibe 53 entfällt und anstelle der dort vorgesehenen Wattepackung 64 eine Stauscheibe 85 vorgesehen ist, durch die eine Staukammer 86 zur Zurückhaltung und insbesondere gleichmäßigen Verteilung des zufließenden Kondensats gebildet ist, aus der es in die Neutralisationsammer 80 und von dort über die Filterschicht 83 in die Korrektionskammer 81 gelangt.

Ebenso entspricht die Ausführungsform gemäß Fig. 12 im wesentlichen der Ausführung gemäß Fig. 3 mit dem Unterschied, daß anstelle der dort vorgesehenen oberen Watteschicht 14 eine Stauscheibe 88 vorgesehen ist.

Im Hinblick darauf, daß jedenfalls im Falle der Ausführungsformen gemäß der Fig. 11 und 12 die Durchflußregelung aufgrund der natürlichen Gravitation in Verbindung mit der Dimensionierung des von gleichmäßig über die Stauscheibenfläche verteilten Löchern erfolgt, ist es erforderlich, die Stauscheiben in im wesentlichen horizontaler Lage im Behälter anzuordnen, damit sich durch das zufließende Kondensat auf der Scheibe eine Flüssigkeitssäule von - über dem Querschnitt - im wesentlichen gleicher Höhe und damit auf der gesamten Fläche ein im wesentlichen gleichmäßiger Staudruck aufbaut, der eine - bezogen auf die Fläche - gleichmäßige Verteilung des Kondensates und damit Beaufschlagung des Neutralisationsmaterials gewährleistet.

## Patentansprüche

1.  Verfahren zur Beseitigung der Säure- und Schwermetallverunreinigungen aus Flüssigkeiten, insbesondere sauren Abwässern sowie den aus den Schornsteinen der Verbrennungsanlagen der Industrie und der Haushalte abfließenden sauren Kondensaten, bei dem die Flüssigkeit in einen ein basisches Neutralisationsmittel enthaltenden Behälter geleitet und nach einer für die Neutralisation ausreichenden Reaktionszeit abgeführt wird, dadurch gekennzeichnet, daß die Neutralisation mit einem im wesentlichen Basen der 2. Hauptgruppe des periodischen Systems, insbesondere Magnesium-Hydroxid enthaltenden pelletierten Material erfolgt und die neutralisierte Flüssigkeit anschließend zum Zwecke der pH-Wert-Einstellung durch eine Schüttung von im wesentlichen Eisen-III-Hydroxid enthaltenden Korrektur-Pellets geleitet wird.

2. Verfahren nach Anspruch 1 , dadurch gekennzeichnet , daß eine Überflutung des basischen Neutralisationsmittels durch das Kondensat durch entsprechende Bemessung der Behälterfläche und Verteilung des Kondensats verhindert wird, derart, daß der Durchlauf des Kondensats über das Neutralisationsmittel tropfend erfolgt.

3. Verfahren zur Beseitigung der Säure- und Schwermetallverunreinigungen aus den Schornsteinen der Verbrennungsanlagen der Industrie und der Haushalte abfließenden sauren Kondensate nach Anspruch 1 oder 2, dadurch gekennzeichnet, daß die Rauchgase in einer Vorreinigungsstufe nach Verlassen des Brennraumes und vor Eintritt in den Schornstein in einer Vorstufe zur Beseitigung der in den Rauchgasen enthaltenen flüchtigen säurebildenden Schadstoffe, insbesondere Schwefeldioxid, Schwefeltrioxid, der Stickoxide sowie der Kohlen-, Chlorkohlen- und Halogenwasserstoffe einerseits und zur Teiloxidation von Stickstoffmonoxid, Schwefeldioxid und Kohlenmonoxid anderseits durch jeweils eine Schüttung von pelletierten Reaktionsmaterialien geleitet werden, die im wesentlichen Basen der 2. oder 7. Hauptgruppe des periodischen Systems, insbesondere Magnesium-Hydroxid bzw. Mangandioxid und/oder Dimangantrioxid enthalten, wobei die Teiloxidation der Stickoxide bis zur Einstellung des Verhältnisses zwischen Stickstoff-Monoxid (NO) und Stickstoff-Dioxid (NO$_2$) auf quasi-äquimolare Mengen erfolgt.

4. Verfahren nach Anspruch 1, 2 oder 3, dadurch gekennzeichnet, daß zur Reinigung der bei einer Temperatur von unter 100° C anfallenden Abgase aus Haushaltsheizungen die das Mangandioxid und/oder Dimangantrioxid enthaltenden Pellets weiterhin ein Oxidationsmittel, beispielsweise Kaliumchlorat und/oder Wasserstoffperoxid, in einer Menge zwischen 3 und 8 Gew.-%, vorteilhaft zwischen 4 und 5,5 Gew.-% enthalten.

5. Verfahren nach Anspruch 2, 3 oder 4, dadurch gekennzeichnet, daß die Pellets als basisch metalloxidischen Anteil der Masse die Rückstände aus Verbrennungsprozessen und metallurgischen Verarbeitungsprozessen, wie Schlacken, Flugasche und/oder Flugstaub, in einer Menge zwischen 15 und 40 Gew.-%, vorzugsweise 25 bis 35 Gew.% enthalten.

6. Verfahren nach einem der Ansprüche 2 bis 5 , dadurch gekennzeichnet, daß die pelletierte Reinigungsmasse der Vorreinigungsstufe Metalloxide in einer Menge zwischen 15 und 65 Gew.-%, vorteilhaft zwischen 45 und 55 Gew.-% bei einem Anteil von Alkali- und Erdalkalimetall-Oxiden und/oder Hydroxiden und/oder Carbonaten von nicht mehr als 10 Gew.-%, vorteilhaft zwischen 4 und 6 Gew.-% enthält.

7. Verfahren nach Anspruch 2 bis 6, dadurch gekennzeichnet, daß die Vorreinigungsstufe von zwei hintereinander geschalteten Absorbern gebildet ist, von denen die Pellets des vorgeschalteten Absorbers im wesentlichen von Magnesiumhydroxid bzw. Magnesiumoxid, und die Pellets des nachgeschalteten Absorbers im wesentlichen von Mangandioxid und/oder Dimangantrioxid für kohle- und ölbeheizte Kesselanlagen bzw. umgekehrt für erdgasbeheizte Kesselanlagen gebildet sind.

8. Verfahren nach Anspruch 1, 2 oder 3, dadurch gekennzeichnet, daß die der Beseitigung der flüchtigen säurebildenden Schadstoffe dienenden Pellets der Vorreinigungsstufe sowie die der Neutralisierung der Säuren der Flüssigphase in der Hauptstufe dienenden Pellets Magnesiumoxid bzw. Magnesiumhydroxid in einer Menge zwischen 60 und 70 Gew.-%, vorteilhaft 64,5 Gew.-%, sowie Eisen-III-Oxid in einer Menge zwischen 3 bis 12 Gew.-%, vorteilhaft 3,5 bis 5,0 Gew.-%, enthalten und eine Porosität (der Schüttung) von 0,05 bis 0,15 aufweisen.

9. Verfahren nach einem der Ansprüche 1, 2, 3 und 8, dadurch gekennzeichnet, daß die Korrektur-Pellets Eisen-III-Hydroxid in einer Menge zwischen 25 und 80, vorteilhaft 65 Gew.-%, sowie Magnesium-Hydroxid in einer Menge zwischen 20 und 75 Gew.-%, vorteilhaft 35 Gew.-% enthalten und eine Porosität der Schüttung zwischen 0,05 und 0,15 aufweisen.

10. Verfahren nach Anspruch 8 oder 9, dadurch gekennzeichnet, daß die Pellets einen stark unterschiedlichen Durchmesser aufweisen und in dem Absorber in einer solchen Mischung enthalten sind, daß sich insgesamt ein gerütteltes Schüttgewicht von 1,050 bis 1,250, vorzugsweise 1,150 kg/l ergibt.

11. Verfahren nach einem der Ansprüche 7 oder 8, dadurch gekennzeichnet, daß die als Neutralisationsmittel dienenden Pellets Reaktionsmaterialien mit stark unterschiedlichen Löslichkeitsprodukten enthalten.

12. Verfahren nach einem der Ansprüche 10 oder 11, dadurch gekennzeichnet, daß das Neutralisationsmittel von Pellets gebildet ist, die als Bestandteile vorpelletierte Keime und Hüllmaterial enthalten, das ein ein um wenigstens drei Zehnerpotenzen kleineres Löslichkeitsprodukt als das die Keime bildende Material aufweist.

13. Verfahren nach Anspruch 12, dadurch gekennzeichnet, daß das Neutralisationsmittel von Pellets gebildet ist, in denen pulverförmige alkalisch wirkende Hydroxidverbindungen von Stoffen mit stark unterschiedlichem Löslichkeitsprodukt zusammen mit Eisen- und/oder Zinkhydroxiden derart pelletiert sind, daß zunächst in einer ersten Stufe bei Zugabe einer geringen Menge an Pelletierwasser Keime einer Größe zwischen 0,05 und 0,15 mm gebildet und anschließend durch Zugabe von weiterem Pelletierwasser die gebildeten Keime zu Pellets verbunden werden.

14. Verfahren nach Anspruch 12 oder 13, dadurch gekennzeichnet, daß als Material mit niedrigerem Löslichkeitsprodukt Oxide bezw. Hydroxide von Eisen und/oder Zink in einer Gesamtmenge von 6,5 bis 17 Gew.-%, vorteilhaft 8 bis 10 Gew. -%, bezogen auf Aktivmasse der Neutralisationspellets, enthält.

15. Vorrichtung zur Durchführung des Verfahrens nach einem der Ansprüche 1 bis 14, bestehend aus einem das pelletierte Reaktionsmaterial enthaltenden Absorber (1), der auf der Einlaufseite mit einer Einrichtung, beispielsweise einer mit Preßwatte bedeckten versehenen Lochplatte, zur gleichmäßigen Verteilung der von oben tropfenweise zufließenden Flüssigkeit auf die Oberfläche der Reaktionsmaterialien versehen ist, dadurch gekennzeichnet, daß die Verteileinrichtung als Stauscheibe (71) ausgebildet ist, mit deren Hilfe in dem in Fließrichtung vor der Scheibe gelegenen Raum zur Erzielung eines im wesentlichen konstanten Staudruckes eine gleichmäßige Säule an Rohkondensat bezw. Abwasser aufrecht erhalten wird.

16. Vorrichtung nach Anspruch 15, dadurch gekennzeichnet, daß der Absorber die Form einer Rinne aufweist, in der durch Stauscheiben (76, 77, 78) Reaktionskammern (74, 79, 80, 81) abgeteilt, die der Homogenisierung, der Neutralisation sowie der pH-Wert-Korrektur des Kondensates dienen.

17. Vorrichtung nach Anspruch 16, dadurch gekennzeichnet, daß die Rinne eine Neigung zwischen 8 und 25° aufweist und die Stauscheiben (85, 88) als Überlauf in im wesentlichen vertikaler Lage in der Rinne angeordnet sind.

18. Vorrichtung nach Anspruch 15, dadurch gekennzeichnet, daß der Absorber die Form einer runden Patrone (Rundbox) aufweist.

19. Vorrichtung nach Anspruch 18, dadurch gekennzeichnet, daß die Stauscheibe aus einer mit gleichmäßig auf der gesamten Fläche verteiltem Rundlöchern versehenen Scheibe besteht, wobei sich der Gesamtddurchflußquerschnitt der Löcher nach der Gleichung

$$T = \frac{2F \times (\sqrt{H_1} - \sqrt{H})}{Phi \times F_0 \times \sqrt{2g}}$$

bemessen, in der

$$T = \text{Zeit in sec}$$
$$F = \text{Gesamtfläche der Lochplatte} \quad (m^2)$$
$$F_0 = \text{Gesamtfläche der Löcher} \quad (m^2)$$
$$H_1 = \text{Stauhöhe der Lochplatte} \quad (m)$$
$$H = \text{Nullstau auf der Lochplatte} \quad (m)$$
$$g = \text{Gravitations-Konstante}$$
$$Phi = \text{Formkoeffizient für die Löcher}$$
$$(\text{gleichmäßig rund} = 0,62)$$

bezeichnen.

20. Vorrichtung nach Anspruch 18 oder 19, dadurch gekennzeichnet, daß die Lochscheibe eine im wesentlichen horizontale, eine Neigung von 1° nicht übersteigende Lage in der Patrone einnimmt.

21. Vorrichtung nach einem der Ansprüche 18 bis 19, dadurch gekennzeichnet, daß die Patrone eine sich in Fließrichtung der Flüssigkeit konisch verjüngende Form aufweist.

22. Vorrichtung nach einem der Ansprüche 15 bis 21, dadurch gekennzeichnet, daß der Absorber auf einen zeitlich begrenzten Teil der Heizungsperiode, beispielsweise einen Monat, ausgelegt ist.

23. Vorrichtung nach Anspruch einem der Ansprüche 18 bis 22, dadurch gekennzeichnet, daß mehrere Patronen in einer Neutralisationsbox zusammengefaßt sind.

24. Vorrichtung nach einem der Ansprüche 18 bis 23, dadurch gekennzeichnet, daß die Box runde Form besitzt und einen mit Filterwatte gefüllten Innenteil, einen den Innenteil umgebenden zylindrischen und mit Reaktionsmaterial gefüllten Absorberteil, einen Auffangbehälter für das Reinkondensat und einen federbeaufschlagten, auf den Absorberteil Druck ausübenden Verteilerring aufweist.

25. Vorrichtung nach Anspruch 24, dadurch gekennzeichnet, daß der Innenteil einen Patronenabsorber und der Außenteil einen mit Filterwatte gefüllten Raum aufweisen.

26. Vorrichtung nach einem der Ansprüche 18 bis 25, dadurch gekennzeichnet, daß der Auffangbehälter mindestens eine zur Aufnahme des Reinkondensats während einer Zeit von 15 bis 20 Minuten ausreichende Größe aufweist.

27. Vorrichtung nach einem der Ansprüche 15 bis 26, dadurch gekennzeichnet, daß in dem Absorberteil in Fließrichtung des Kondensates zwei Umsetzungszonen abgeteilt sind, und zwar eine Pelletstufe zur Neutralisation von Säuren, Ausfällung von Schwermetallen (Cr, Cu, Pb, Cd, Hg, Zn) in Form schwerstlöslicher Hydroxide bei einem pH-Wert zwischen 9,2 und 10,0, sowie unter Zwischenschaltung einer Watteschicht zur Filtrierung der ausgefällten Schwermetallhydroxide in Eisen-III-Hydroxid-Kolloid-Phase eine im wesentlichen von Eisenhydroxid-Pellets gebildete Pelletphase zur Korrektur des pH-Wertes des Kondensats auf einen umweltverträglichen Wert von unter 9,0.

28. Vorrichtung nach Anspruch 27, dadurch gekennzeichnet, daß den Umsetzungszonen eine von Organobentonit gebildete Zone zur Beseitigung von organischen Spuren-Verunreinigungen vorgeschaltet ist.

29. Vorrichtung nach einem der Ansprüche 18 bis 28, dadurch gekennzeichnet, daß die in dem Absorber enthaltenen Reaktionsmaterialien zum Zwecke der Zurückhaltung der von der Flüssigkeit mitgeführten Feststoff-Verunreinigungen am Einlauf der zu behandelnden Kondensate mittels einer Filterschicht aus Watte, Glaswolle oder dergl. getrennt sind.

30. Vorrichtung nach Anspruch 18 oder 29, dadurch gekennzeichnet, daß der Absorber aus zwei voneinander durch eine Filterschicht (32) bezw. einen Boden (21) getrennten Kammern besteht, von denen die vor der Filterschicht bezw. dem Boden liegende Verteilerkammer (22, 33) von der hinter der Filterschicht bezw. Boden liegenden Kammer (23, 34) flüssigkeitsdicht getrennt ist, wobei die Verteilerkammer (22, 33) mit der Absorberkammer (23, 34) mittels einer Vielzahl von das zufließende Kondensat gleichmäßig verteilenden Überlaufleitungen (24, 35) verbunden ist,

31. Vorrichtung nach Anspruch 30, dadurch gekenzeichnet, daß die Absorberkammer von einer oder entsprechend der zu reinigenden Flüssigkeitsmenge mehreren, durch einen Verteiler verbundenen, einzeln austauschbaren Absorberpatronen gebildet ist.

32. Vorrichtung nach Anspruch 29, 30 oder 21, dadurch gekennzeichnet, daß an dem auf der Seite der Absorberkammer (23, 31) gelegenen Ende der Überlaufleitungen ( 24, 35 ) eine der gleichmäßigen Verteilung des zufließenden Kondensats auf die gesamte Querschnittsfläche der Reaktionskammer dienende Filter- oder Verteilerschicht (25, 36) vorgesehen ist.

33. Vorrichtung nach einem der Ansprüche 29 bis 32, dadurch gekennzeichnet, daß die Filterschicht (6) und/oder die Verteilerschicht (8) aus einem halbgepreßten Flies aus Watte und/oder Glaswatte, einem porösen Einsatz aus gesintertem oder gepreßtem keramischen Material oder dergl. besteht.

34. Vorrichtung nach einem der Ansprüche 29 bis 33, dadurch gekennzeichnet, daß die Patronen einen sich nach unten in einem Winkel von etwa 1 bis 3° verjüngenden konischen Querschnitt aufweisen.

35. Vorrichtung nach einem der Ansprüche 18 bis 34, dadurch gekennzeichnet, daß die Überlaufleitungen zwecks gleichmäßiger Verteilung des zu neutralisierenden Kondensats einen schrägen, 30 bis 45⁰ aufweisenden Überlaufquerschnitt aufweisen.

36. Vorrichtung zur Durchführung des Verfahrens nach einem der Ansprüche 15 bis 35, dadurch gekennzeichnet, daß eine volle Schüttung von Neutralisationspellets eingesetzt wird.

37. Vorrichtung nach einem oder mehreren der Ansprüche 15 bis 36, dadurch gekennzeichnet, daß die Kammern bezw . Patronen als Einheitsboxen ausgebildet sind, die zu vergrößerte Ausmaße aufweisenden Boxen, übereinander aufgestellte Neutralisationssysteme bis 300 kW Heizleistung aufgebaut werden können.

38. Vorrichtung nach einem oder mehreren der Ansprüche 15 bis 37, dadurch gekennzeichnet, daß die Pelletmenge derart auf die Menge des behandelten Kondensats abgestimmt ist, daß die Pellets einer hydraulischen Belastung zwischen 0,03 und 0,08, vorzugsweise etwa 0,05 l/cm²xh unterliegen, wobei die Gesamtleistung 4 500 bis 6 00 Liter Kondensat mit einem Anfangs-pH-Wert von 1 - 2 pro Liter Neutralisationspellets beträgt.

FIG. 1

FIG. 2

FIG.4

FIG.5

EP 0 454 948 A2

FIG.3

EP 0 454 948 A2

(K) 50 kW 4 ×(330×250×210)

VARIANTE A

840

(K) 50 kW 2 ×(376×376×210)

VARIANTE B

420

(K) 50 kW 1 ×(476×476×210)

VARIANTE C

FIG. 6

EP 0 454 948 A2

(K)    50kW   4 × (330×250×210)

VARIANTE D

(K)    50kW   2 × (376×376×210)

VARIANTE E

(K)    50kW   1 × (476×476×210)

VARIANTE F

840

420

FIG. 7

FIG. 8

EP 0 454 948 A2

FIG. 9

FIG. 10

EP 0 454 948 A2

FIG.12

88

80

83

81

FIG.11

86

85

52

51